# DEMANDE DE BREVET EUROPEEN

(11) **EP 4 421 992 A1**
(43) Date de publication de la demande: **28.08.2024**
(21) Numéro de dépôt: 24157412.8
(22) Date de dépôt: 13.02.2024
(51) Int. Cl.: H01Q 3/46, H01Q 21/00

(54) **CELLULE D'ANTENNE À RÉSEAU TRANSMETTEUR**

(30) Priorité: 15.02.2023 FR 2301423
(71) Demandeur: Commissariat à l'énergie atomique et aux énergies alternatives, 75015 Paris (FR)
(72) Inventeur: CLEMENTE, Antonio, 38054 Grenoble Cedex 09 (FR); DEHOS, Cedric, 38054 Grenoble Cedex 09 (FR); GONZALEZ JIMENEZ, José-Luis, 38054 Grenoble Cedex 09 (FR)
(74) Mandataire: Cabinet Beaumont

(57) **Abrégé**

La présente description concerne une cellule (105) de réseau transmetteur adaptée à mettre en œuvre une communication bidirectionnelle simultanée, la cellule comprenant :
- un premier élément d'antenne (105a) situé sur une première face de la cellule ;
- un deuxième élément d'antenne (105b) situé sur une deuxième face de la cellule, opposée à la première face ;
- un canal d'émission comprenant, entre les premier et deuxième éléments d'antenne, un premier circuit (203a) de déphasage et d'amplification ; et
- un canal de réception comprenant, entre les premier et deuxième éléments d'antenne, un deuxième circuit (203b) de déphasage et d'amplification.

## Description

### Domaine technique

La présente description concerne de façon générale les dispositifs électroniques et, plus particulièrement, le domaine des antennes radio à réseau transmetteur (« transmitarray antenna », en anglais).

### Technique antérieure

Parmi les différentes technologies d'antennes de communication radio existantes, on connaît notamment des antennes radio dites « à réseau transmetteur ». Ces antennes comprennent généralement plusieurs cellules élémentaires comportant chacune un premier élément d'antenne irradié par un champ électromagnétique émis par une ou plusieurs sources, un deuxième élément d'antenne transmettant un signal modifié vers l'extérieur de l'antenne, et un élément de couplage entre les premier et deuxième éléments d'antenne.

Les antennes à réseau transmetteur existantes souffrent toutefois de divers inconvénients.

### Résumé de l'invention

Il existe un besoin d'améliorer les antennes à réseau transmetteur existantes. Il serait en particulier souhaitable de disposer d'antennes à réseau transmetteur adaptées à mettre en oeuvre une communication bidirectionnelle simultanée.

Pour cela, un mode de réalisation prévoit une cellule de réseau transmetteur adaptée à mettre en oeuvre une communication bidirectionnelle simultanée, la cellule comprenant :
- un premier élément d'antenne situé sur une première face de la cellule ;
- un deuxième élément d'antenne situé sur une deuxième face de la cellule, opposée à la première face ;
- un canal d'émission comprenant, entre les premier et deuxième éléments d'antenne, un premier circuit de déphasage et d'amplification ; et
- un canal de réception comprenant, entre les premier et deuxième éléments d'antenne, un deuxième circuit de déphasage et d'amplification.

Selon un mode de réalisation, le canal d'émission est adapté à émettre un premier signal présentant un premier état de polarisation, et le canal de réception est adapté à recevoir un deuxième signal présentant un deuxième état de polarisation, différent du premier état de polarisation.

Selon un mode de réalisation, les premier et deuxième signaux présentent des polarisations linéaires orthogonales.

Selon un mode de réalisation, les premier et deuxième signaux présentent des polarisations circulaire et linéaire, respectivement.

Selon un mode de réalisation, chacun des premier et deuxième éléments d'antenne comprend un plan conducteur de forme sensiblement carrée et des premier et deuxième ports situés respectivement au voisinage de premier et deuxième côtés adjacents du plan conducteur.

Selon un mode de réalisation, les premier et deuxième ports du premier élément d'antenne sont situés respectivement à l'aplomb des premier et deuxième ports du deuxième élément d'antenne.

Selon un mode de réalisation, les premier et deuxième ports du premier élément d'antenne sont reliés respectivement, par les premier et deuxième circuits de déphasage et d'amplification, aux premier et deuxième ports du deuxième élément d'antenne.

Selon un mode de réalisation, les premier et deuxième ports du premier élément d'antenne sont reliés respectivement, par les premier et deuxième circuits de déphasage et d'amplification, aux deuxième et premier ports du deuxième élément d'antenne.

Selon un mode de réalisation, la cellule comprend en outre des premier et deuxième plans de masse interposés entre le premier élément d'antenne et le deuxième élément d'antenne.

Selon un mode de réalisation, les premier et deuxième circuits de déphasage et d'amplification sont interposés entre les premier et deuxième plans de masse.

Selon un mode de réalisation, les premier et deuxième éléments d'antenne et les premier et deuxième plans de masse sont formés dans des niveaux conducteurs d'une carte de circuit imprimé.

Selon un mode de réalisation, les canaux d'émission et de réception comprennent chacun un circuit de déphasage et un circuit d'amplification connectés en série entre le premier élément d'antenne et le deuxième élément d'antenne.

Un mode de réalisation prévoit un réseau transmetteur comprenant une pluralité de cellules telles que décrites.

Selon un mode de réalisation, le premier élément d'antenne de chaque cellule est isolé électriquement du premier élément d'antenne de chacune des autres cellules, et le deuxième élément d'antenne de chaque cellule est isolé électriquement du deuxième élément d'antenne de chacune des autres cellules.

Un mode de réalisation prévoit une antenne comprenant un réseau transmetteur tel que décrit et au moins une source configurée pour irradier une face du réseau.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de côté, schématique et partielle, d'un exemple d'antenne à réseau transmetteur du type auquel s'appliquent, à titre d'exemple, des modes de réalisation décrits ;
la figure 2 est une vue de côté, schématique et partielle, d'un exemple d'antenne à réseau transmetteur selon un mode de réalisation ;
la figure 3A est une vue de côté, schématique et partielle, d'un exemple de cellule de réseau transmetteur selon un mode de réalisation ;
la figure 3B est une vue de dessus, schématique et partielle, d'un exemple d'élément d'antenne de la cellule de la figure 3A ;
la figure 3C est une vue de dessus, schématique et partielle, d'un exemple de plan de masse de la cellule de la figure 3A ;
la figure 4A est une vue de côté, schématique et partielle, d'un exemple de cellule de réseau transmetteur selon un mode de réalisation ;
la figure 4B est une vue de dessus, schématique et partielle, d'un exemple de plan de masse de la cellule de la figure 4A ; et
la figure 4C est une vue de dessus, schématique et partielle, d'un exemple d'un autre plan de masse de la cellule de la figure 4A.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des modes de réalisation d'une cellule élémentaire pour antenne à réseau transmetteur sont décrits ci-après. La structure et le fonctionnement de la ou des sources primaires de l'antenne, destinées à irradier le réseau transmetteur, ne seront toutefois pas détaillés, les modes de réalisation décrits étant compatibles avec toutes ou la plupart des sources primaires d'irradiation pour antenne à réseau transmetteur connues. À titre d'exemple, chaque source primaire est adaptée à produire un faisceau de forme générale conique irradiant tout ou partie du réseau transmetteur. Chaque source primaire comprend par exemple une antenne cornet. À titre d'exemple, l'axe central de chaque source primaire est sensiblement orthogonal au plan moyen du réseau.

Par ailleurs, les procédés de fabrication des réseaux transmetteurs décrits ne seront pas détaillés, la réalisation des structures décrites étant à la portée de la personne du métier à partir des indications de la présente description, par exemple en mettant en oeuvre des techniques usuelles de fabrication de circuits imprimés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % près, de préférence à 5 % près.

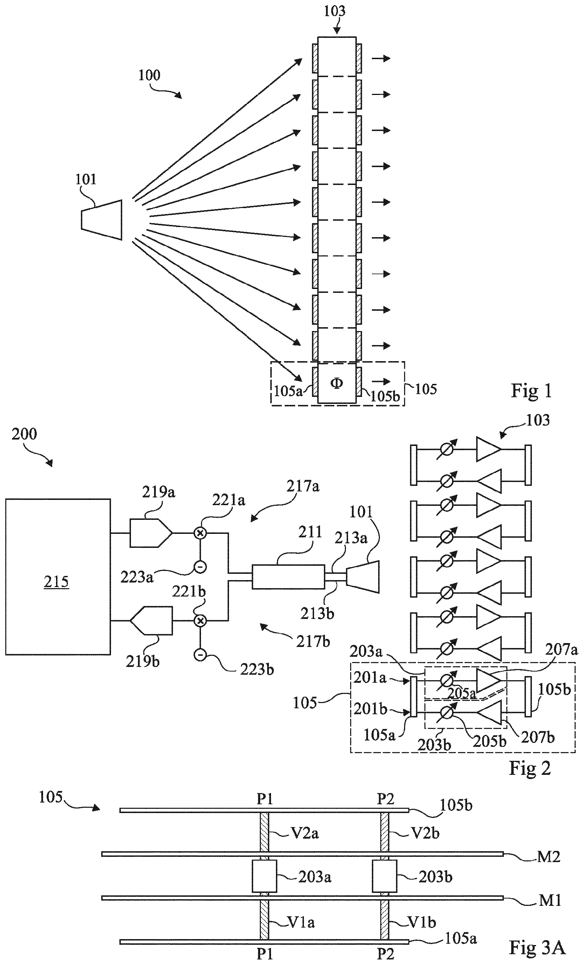

La figure 1 est une vue de côté, schématique et partielle, d'un exemple d'antenne 100 à réseau transmetteur (« transmitarray antenna », en anglais) du type auquel s'appliquent, à titre d'exemple, des modes de réalisation décrits.

L'antenne 100 comprend typiquement une ou plusieurs sources primaires 101 (une unique source 101, dans l'exemple représenté) irradiant un réseau transmetteur 103. La source 101 peut présenter une polarisation quelconque, par exemple linéaire ou circulaire. Le réseau 103 comprend une pluralité de cellules élémentaires 105, par exemple disposées en matrice selon des lignes et des colonnes. Chaque cellule 105 comprend typiquement un premier élément d'antenne 105a, situé du côté d'une première face du réseau 103 disposée en regard de la source primaire 101, et un deuxième élément d'antenne 105b, situé du côté d'une deuxième face du réseau opposée à la première face. La deuxième face du réseau 103 est par exemple tournée vers un milieu d'émission, ou milieu extérieur, de l'antenne 100.

Chaque cellule 105 est apte, en émission, à recevoir un rayonnement électromagnétique sur son premier élément d'antenne 105a et à réémettre ce rayonnement depuis son deuxième élément d'antenne 105b, par exemple en introduisant un déphasage φ connu. En réception, chaque cellule 105 est apte à recevoir un rayonnement électromagnétique sur son deuxième élément d'antenne 105b et à réémettre ce rayonnement depuis son premier élément d'antenne 105a, en direction de la source 101, avec le même déphasage φ. Le rayonnement réémis par le premier élément d'antenne 105a est par exemple focalisé sur la source 101.

Les caractéristiques du rayonnement en champ proche ou lointain produit par l'antenne 100, notamment sa forme (ou gabarit), son intensité et sa direction d'émission maximale (ou direction de pointage), dépendent des valeurs des déphasages respectivement introduits par les différentes cellules 105 du réseau 103.

Les antennes à réseau transmetteur ont pour avantages, entre autres, de présenter une bonne efficacité énergétique et d'être relativement simples, peu onéreuses et peu encombrantes. Cela provient notamment du fait que les réseaux transmetteurs sont réalisables en technologie planaire, généralement sur circuit imprimé.

La présente description vise plus particulièrement les antennes à réseau transmetteur 103 reconfigurable. Le réseau transmetteur 103 est dit reconfigurable lorsque les cellules élémentaires 105 sont commandables électroniquement de façon individuelle pour modifier leur valeur de déphasage φ et/ou leur amplitude, ce qui permet de modifier dynamiquement les caractéristiques du rayonnement généré par l'antenne, et notamment de modifier sa direction de pointage sans déplacer mécaniquement l'antenne ou une partie de l'antenne au moyen d'un élément motorisé.

La figure 2 est une vue de côté, schématique et partielle, d'un exemple d'antenne 200 à réseau transmetteur selon un mode de réalisation. L'antenne 200 de la figure 2 comprend des éléments communs avec l'antenne 100 de la figure 1. Ces éléments communs ne seront pas détaillés à nouveau ci-après.

Dans l'exemple représenté, chaque cellule élémentaire 105 du réseau transmetteur 103 comprend un canal d'émission 201a et un canal de réception 201b destinés respectivement à émettre et à recevoir des signaux, par exemple simultanément. À l'intérieur de chaque cellule 105, chaque canal 201a, 201b relie le premier élément d'antenne 105a au deuxième élément d'antenne 105b de la cellule. Dans l'exemple illustré, pour chaque cellule 105, le premier élément d'antenne 105a connecte une première extrémité du canal d'émission 201a à une première extrémité du canal de réception 201b. De façon analogue, le deuxième élément d'antenne 105b de la cellule 105 connecte une deuxième extrémité du canal d'émission 201a, opposée à la première extrémité du canal 201a, à une deuxième extrémité du canal de réception 201b, opposée à la première extrémité du canal 201b. Par ailleurs, le premier élément d'antenne 105a de chaque cellule élémentaire 105 est isolé électriquement du premier élément d'antenne 105a de chacune des autres cellules 105, et le deuxième élément d'antenne 105b de chaque cellule élémentaire 105 est isolé électriquement du deuxième élément d'antenne 105b de chacune des autres cellules 105.

Chaque canal d'émission 201a comprend un circuit de déphasage et d'amplification 203a, et chaque canal de réception 201b comprend un circuit de déphasage et d'amplification 203b. Dans l'exemple représenté, chaque circuit de déphasage et d'amplification 203a, 203b comprend, entre les premier et deuxième éléments d'antenne 105a et 105b, un circuit de déphasage 205a, 205b associé en série avec un circuit d'amplification 207a, 207b.

Le circuit de déphasage 205a du canal d'émission 201a comporte une borne reliée, de préférence connectée, au premier élément d'antenne 105a et une autre borne reliée, de préférence connectée, à une borne, par exemple une borne d'entrée, du circuit d'amplification 207a, le circuit d'amplification 207a comportant en outre une autre borne, par exemple une borne de sortie, reliée, de préférence connectée, au deuxième élément d'antenne 105b. Par ailleurs, le circuit d'amplification 270b du canal de réception 201b comporte une borne, par exemple une borne d'entrée, reliée, de préférence connectée, au deuxième élément d'antenne 105b et une autre borne, par exemple une borne de sortie, reliée, de préférence connectée, à une borne du circuit de déphasage 205b, le circuit de déphasage 205b comportant en outre une autre borne reliée, de préférence connectée, au premier élément d'antenne 105a.

À titre d'exemple, chaque circuit de déphasage 205a, 205b comprend au moins un élément choisi parmi une diode, par exemple une diode PIN, un microsystème électromécanique, une diode varicap ou varactor, un circuit intégré de déphasage, etc. Chaque circuit de déphasage 205a, 205b reçoit par exemple un signal de commande provenant d'un circuit de commande (non illustré en figure 2), par exemple un microcontrôleur, adapté à commuter les signaux transmis par chaque circuit 205a, 205b entre deux états de phase distincts.

Le circuit d'amplification 207a du canal d'émission 201a est par exemple un amplificateur de puissance, par exemple un amplificateur linéaire de classe A en technologie CMOS (de l'anglais « Complementary Metal-Oxide-Semiconductor » - métal oxyde semiconducteur complémentaire) SOI (de l'anglais « Silicon On Insulator » - silicium sur isolant), par exemple du type décrit dans l'article de A. Hamani, A. Siligaris, B. Blampey et J. L. G. Jimenez intitulé « 167-GHz and 155-GHz High Gain D-band Power Amplifiers in CMOS SOI 45-nm Technology » issu de la quinzième conférence « European Microwave Integrated Circuits Conférence (EuMIC) » à Utrecht, Pays-Bas de 2021, pages 261 à 264.

Le circuit d'amplification 207b du canal de réception 201b est par exemple un amplificateur faible bruit (« Low Noise Amplifier » - LNA, en anglais). Cela permet d'optimiser un facteur de bruit du canal de réception 201b. À titre d'exemple, chaque circuit d'amplification 207b comprend un amplificateur de classe « AB » comportant par exemple un ou deux étages de fonctionnement. Chaque circuit d'amplification 207b présente par exemple une puissance électrique comprise entre 10 et 20 mW.

Dans l'exemple représenté, la source 101 de l'antenne 200 à réseau transmetteur est connectée à un circuit d'élimination ou d'annulation d'interférences (« canceller », en anglais) 211. Plus précisément, dans cet exemple, des première et deuxième liaisons 213a et 213b, isolées électriquement l'une de l'autre, connectent le circuit 211 à la source 101.

L'antenne 200 comprend en outre un circuit de traitement 215 relié au circuit 211. Dans l'exemple représenté, le circuit 215 est relié au circuit 211 par un canal d'émission 217a comprenant un convertisseur numérique-analogique 219a associé en série avec un mélangeur 221a (x). Le circuit 211 est en outre relié au circuit 215 par un canal de réception 217b comprenant un mélangeur 221b (x) associé en série avec un convertisseur analogique-numérique 219b. Chaque mélangeur 221a, 221b est par exemple connecté à un oscillateur 223a, 223b (~), par exemple un oscillateur commandé en tension (« Voltage Control Oscillator » - VCO, en anglais) ou une boucle à verrouillage de phase (« Phase-Locked Loop » - PLL, en anglais).

Dans l'exemple illustré, le convertisseur numérique-analogique 219a du canal d'émission 217a comporte des bornes d'entrée et de sortie connectées respectivement au circuit 215 et à une borne du mélangeur 221a, le mélangeur 221a comportant en outre une autre borne connectée au circuit 211. Par ailleurs, dans cet exemple, le mélangeur 221b du canal de réception 217b comporte une borne connectée au circuit 211 et une autre borne connectée à une borne d'entrée convertisseur analogique-numérique 219b, le convertisseur analogique-numérique 219b comportant en outre une borne de sortie connectée au circuit 215.

À titre d'exemple, le circuit 215 est adapté à coder et à moduler un signal à émettre par le canal d'émission 217a, et à démoduler et à décoder un signal reçu par le canal de réception 217b.

L'antenne 200 est configurée pour mettre en oeuvre une communication bidirectionnelle simultanée (« full-duplex », en anglais), c'est-à-dire que l'antenne 200 peut émettre et recevoir des signaux de façon simultanée dans une même bande de fréquences (« In-Band Full-Duplex » - IBFD, en anglais). L'antenne 200 est notamment différente des antennes à accès multiple par répartition en fréquence (« Frequency Division Multiple Access » - FDMA, en anglais) dont les canaux d'émission et de réception sont séparés en fréquence. Un premier signal à émettre est par exemple produit par le circuit 215 puis transmis, par l'intermédiaire du canal d'émission 217a et de la première liaison 213a, à la source 101 irradiant le réseau 103. Le premier signal parvient alors jusqu'aux premiers éléments d'antenne 105a des cellules 105 du réseau 103 puis est transmis, par l'intermédiaire des canaux d'émission 201a, aux deuxièmes éléments d'antenne 105b pour être rayonné vers le milieu extérieur. Dans le même temps, un deuxième signal à recevoir en provenance du milieu extérieur est par exemple capté par les deuxièmes éléments d'antenne 105b des cellules 105 du réseau 103 puis est transmis, par l'intermédiaire des canaux de réception 201b, jusqu'aux premiers éléments d'antenne 105a. Le deuxième signal est alors rayonné vers la source 101 puis est transmis, par l'intermédiaire de la deuxième liaison 213b et du canal de réception 217b, au circuit 215 pour être traité.

En émission, le premier élément d'antenne 105a reçoit le signal rayonné par l'antenne 101. Le signal est ensuite déphasé et amplifié par le canal d'émission 201a, plus précisément par le circuit de déphasage 205a et par le circuit d'amplification 207a, respectivement, puis réémis par le deuxième élément d'antenne 105b vers le milieu extérieur. En réception, le deuxième élément d'antenne 105b reçoit le signal en provenance du milieu extérieur. Le signal est ensuite amplifié puis déphasé par le canal de réception 201b, plus précisément par le circuit d'amplification 207b et par le circuit de déphasage 205b, respectivement, puis réémis par le premier élément d'antenne vers la source 101.

Les signaux émis et reçus par l'antenne 200 présentent respectivement des premier et deuxième états ou sens de polarisation distincts. À titre d'exemple, les signaux émis et reçus présentent respectivement des première et deuxième polarisations linéaires orthogonales entre elles, la première polarisation étant par exemple une polarisation linéaire dite « verticale » et la deuxième polarisation une polarisation linéaire dite « horizontale ».

À titre de variante, au moins l'une des première et deuxième polarisations peut être une polarisation circulaire. Dans ce cas, les première et deuxième polarisations peuvent être des polarisations circulaires de sens opposés, la première polarisation étant par exemple une polarisation circulaire dite « gauche » (sens anti-horaire, du point de vue de la source 101) et la deuxième polarisation étant par exemple une polarisation circulaire dite « droite » (sens horaire, du point de vue de la source 101), ou la première polarisation étant une polarisation circulaire et la deuxième polarisation étant une polarisation linéaire. Le fait de prévoir que les signaux émis et reçus par l'antenne présentent respectivement des polarisations circulaire et linéaire permet avantageusement d'obtenir une meilleure séparation de ces signaux.

En figure 2, une seule source 101 a été illustrée. La source 101 est par exemple une source dite « bipolarisation », capable d'émettre et de recevoir des signaux présentant respectivement deux polarisations distinctes. À titre de variante, la source 101 peut être remplacée par des première et deuxième sources séparées spatialement, la première source étant par exemple adaptée à émettre des signaux présentant une première polarisation et la deuxième source étant adaptée à recevoir des signaux présentant une deuxième polarisation, différente de la première polarisation. Dans ce cas, le circuit 211 est connecté aux première et deuxième sources par les première et deuxième liaisons 213a et 213b, respectivement.

Un avantage de l'antenne 200 de la figure 2 tient au fait qu'elle permet d'atteindre des performances supérieures, notamment en termes d'annulation d'interférences, supérieures à celles des antennes existantes.

La figure 3A est une vue de côté, schématique et partielle, de la cellule 105 du réseau transmetteur 103 selon un mode de réalisation.

Dans l'exemple représenté, la cellule 105 comprend deux plans de masse M1 et M2 disjoints sensiblement parallèles entre eux et interposés entre les premier et deuxième éléments d'antenne 105b. Les premier et deuxième éléments d'antenne 105a et 105b sont, dans cet exemple, sensiblement parallèles entre eux et aux plans de masse M1 et M2. Dans l'exemple illustré, les circuits 203a et 203b sont interposés entre les plans de masse M1 et M2.

Dans l'exemple illustré en figure 3A, le circuit 203a de déphasage et d'amplification est connecté, par un via conducteur V1a, à un premier port ou borne de conduction P1 du premier élément d'antenne 105a. Le circuit 203a est en outre connecté, par un autre via conducteur V2a, à un premier port ou borne de conduction P1 du deuxième élément d'antenne 105b. De façon analogue, le circuit 203b de déphasage et d'amplification est connecté, par un via conducteur V2a, à un deuxième port ou borne de conduction P2 du premier élément d'antenne 105a. Le circuit 203b est en outre connecté, par un autre via conducteur V2b, à un deuxième port ou borne de conduction P2 du deuxième élément d'antenne 105b.

À titre d'exemple, les premier et deuxième éléments d'antenne 105a et 105b et les plans de masse M1 et M2 sont formés dans des niveaux conducteurs ou niveaux de métallisation d'une carte de circuit imprimé (« Printed Circuit Board » - PCB, en anglais), les niveaux conducteurs étant séparés les uns des autres par des niveaux isolants non représentés en figure 3A. Les circuits 203a et 203b sont par exemple réalisés en technologie CMOS ou BiCMOS (de l'anglais « Bipolar Complementary Métal Oxide Semiconductor », métal oxyde semiconducteur complémentaire bipolaire). À titre d'exemple, les circuits 203a et 203b peuvent être implémentés dans des composants discrets ou intégrés. Par ailleurs, un circuit intégré connecté à plusieurs antennes peut être prévu.

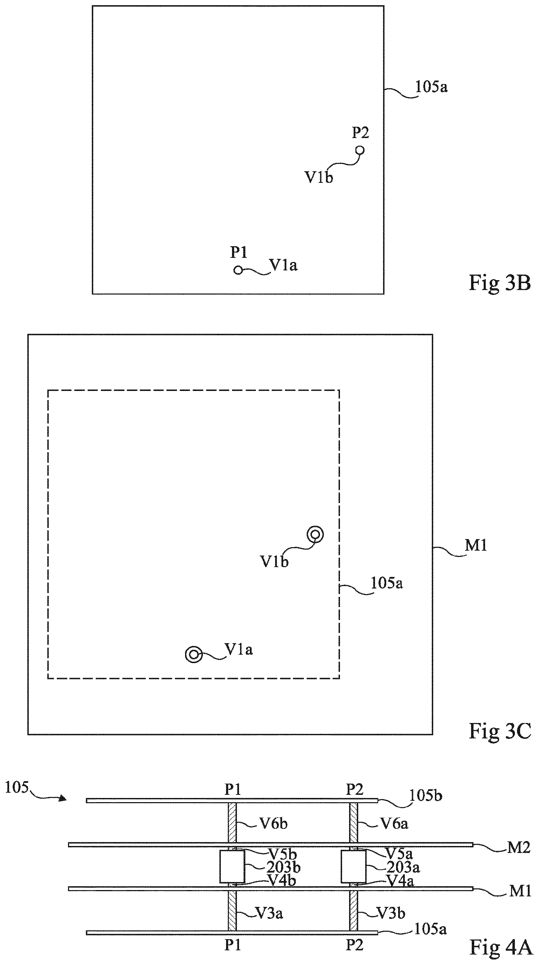

La figure 3B est une vue de dessus, schématique et partielle, du premier élément d'antenne 105a de la cellule 105 de la figure 3A.

Dans l'exemple représenté, le premier élément d'antenne 105a est une antenne à plaque (« patch antenna », en anglais) comprenant un plan conducteur de forme sensiblement carrée auquel sont connectés les vias V1a et V1b par les ports P1 et P2, respectivement. Cet exemple n'est toutefois pas limitatif, le plan conducteur du premier élément d'antenne 105a pouvant présenter une forme quelconque, par exemple rectangulaire. Dans l'exemple illustré, le port P1 est situé au voisinage d'un premier côté du carré formé par le plan conducteur et le port P2 est situé au voisinage d'un deuxième côté du carré adjacent au premier côté. Dans cet exemple, les ports P1 et P2 sont sensiblement alignés par rapport aux milieux des premier et deuxième côtés, respectivement.

Dans l'exemple représenté, le premier élément d'antenne 105a est adapté à transmettre, par le port P1, un premier signal présentant une polarisation linéaire (une polarisation horizontale, dans l'orientation de la figure 3B). Dans cet exemple, le premier élément d'antenne 105a est en outre adapté à émettre vers la source 101, depuis le port P2, un deuxième signal présentant une polarisation linéaire orthogonale à celle du premier signal (une polarisation verticale, dans l'orientation de la figure 3B).

Bien que cela n'ait pas été illustré dans les figures, le deuxième élément d'antenne 105b est par exemple analogue ou identique au premier élément d'antenne 105a. À titre d'exemple, les ports P1 et P2 du deuxième élément d'antenne 105b sont situés respectivement à l'aplomb des ports P1 et P2 du premier élément d'antenne 105a. Dans ce cas, les vias V2a et V2b sont par exemple situés respectivement à l'aplomb des vias V1a et V1b.

La figure 3C est une vue de dessus, schématique et partielle, du plan de masse M1 de la cellule 105 de la figure 3A.

Dans l'exemple représenté, les vias V1a et V1b sont électriquement isolés du plan de masse M1. De façon analogue, les vias V2a et V2b sont par exemple électriquement isolés du plan de masse M2, le plan de masse M2 étant par exemple analogue ou identique au plan de masse M1.

La figure 4A est une vue de côté, schématique et partielle, de la cellule 105 selon un autre mode de réalisation. Le mode de réalisation de la figure 4A diffère de celui de la figure 3A en ce que, dans le mode de réalisation de la figure 4A, le premier port P1 du premier élément d'antenne 105a est relié au deuxième port P2 du deuxième élément d'antenne 105b, et le deuxième port P2 du premier élément d'antenne 105a est relié au premier port P1 du deuxième élément d'antenne 105b.

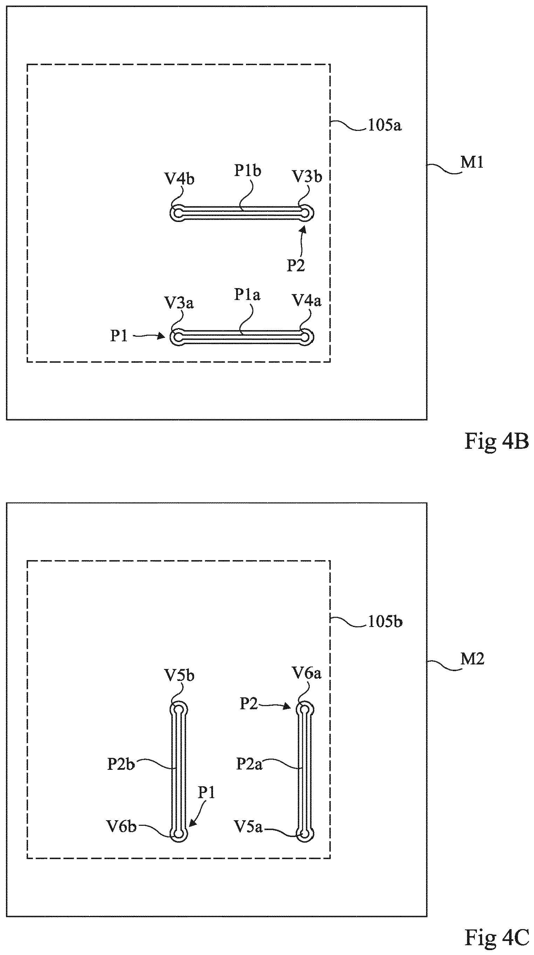

La figure 4B est une vue de dessus, schématique et partielle, du plan de masse M1 de la cellule 105 de la figure 4A et la figure 4C est une vue de dessus, schématique et partielle, du plan de masse M2 de la cellule 105 de la figure 4A.

Dans l'exemple représenté, la cellule 105 comprend plus précisément :
- un via V3a connectant le premier port P1 du premier élément d'antenne 105a à une première extrémité d'une piste conductrice P1a, la piste P1a étant par exemple formée dans le même niveau conducteur que le plan de masse M1 et isolée électriquement du plan de masse M1 ;
- un via V4a connectant une deuxième extrémité de la piste P1a, opposée à la première extrémité de la piste P1a, au circuit 203a ;
- un via V5a connectant le circuit 203a à une première extrémité d'une piste conductrice P2a, la piste P2a étant par exemple formée dans le même niveau conducteur que le plan de masse M2 et isolée électriquement du plan de masse M2 ; et
- un via V6a connectant une deuxième extrémité de la piste P2a, opposée à la première extrémité de la piste P2a, au deuxième port P2 du deuxième élément d'antenne 105b.

Bien que cela n'ait pas été détaillé sur les figures afin de ne pas surcharger le dessin, la cellule 105 peut en outre comprendre une ou plusieurs couches de redistribution (« Redistribution Layer » - RDL, en anglais) des signaux radiofréquence émis et reçus, d'un signal de masse et d'un signal d'alimentation.

De façon analogue, la cellule 105 comprend en outre :
- un via V3b connectant le deuxième port P2 du premier élément d'antenne 105a à une première extrémité d'une piste conductrice P1b, la piste P1b étant par exemple formée dans le même niveau conducteur que le plan de masse M1 et isolée électriquement du plan de masse M1 ;
- un via V4b connectant une deuxième extrémité de la piste P1b, opposée à la première extrémité de la piste P1b, au circuit 203b ;
- un via V5b connectant le circuit 203b à une première extrémité d'une piste conductrice P2b, la piste P2b étant par exemple formée dans le même niveau conducteur que le plan de masse M2 et isolée électriquement du plan de masse M2 ; et
- un via V6b connectant une deuxième extrémité de la piste P2b, opposée à la première extrémité de la piste P2b, au premier port P1 du deuxième élément d'antenne 105b.

Dans l'exemple représenté, les pistes P1a et P1b sont sensiblement parallèles entre elles, et les pistes P2a et P2b sont sensiblement parallèles entre elles et orthogonales aux pistes P1a et P1b.

Un avantage du mode de réalisation de la cellule 105 exposé ci-dessus en relation avec les figures 4A à 4C tient au fait qu'il permet de réduire ou d'annuler encore davantage les interférences entre les signaux émis et reçus par l'antenne. À titre d'exemple, l'isolation de la cellule 105 des figures 4A à 4C est améliorée d'un facteur deux, en décibels (dB), par rapport à celle de la cellule 105 des figures 3A à 3B.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le mode de réalisation de la cellule 105 détaillé ci-dessus en relation avec les figures 4A à 4C ne se limite pas à la structure décrite, d'autres structures de cellule 105 pouvant être prévues par la personne du métier, à partir des indications de la présente description, pour relier les ports P1 et P2 du premier élément d'antenne 105a aux ports P2 et P1, respectivement, du deuxième élément d'antenne 105b. Par ailleurs, la personne du métier est capable d'adapter la structure de la cellule 105, notamment des premier et deuxième éléments d'antenne 105a et 105b, au cas où la polarisation du signal à émettre et/ou du signal reçu par l'antenne 200 présente une polarisation différente d'une polarisation linéaire, par exemple une polarisation circulaire.

Enfin, la mise en oeuvre pratique des modes de réalisation et variantes décrits est à la portée de la personne du métier à partir des indications fonctionnelles données ci-dessus. En particulier, la réalisation pratique des circuits d'amplification et de déphasage 203a et 203b des canaux d'émission et de réception 201a et 201b est à la portée de la personne du métier à partir des indications de la présente description.

## Revendications

1. Cellule (105) de réseau transmetteur (103) adaptée à mettre en oeuvre une communication bidirectionnelle simultanée, la cellule comprenant :
- un premier élément d'antenne (105a) situé sur une première face de la cellule ;
- un deuxième élément d'antenne (105b) situé sur une deuxième face de la cellule, opposée à la première face ;
- un canal d'émission (201a) comprenant, entre les premier et deuxième éléments d'antenne, un premier circuit (203a) de déphasage et d'amplification ; et
- un canal de réception (201b) comprenant, entre les premier et deuxième éléments d'antenne, un deuxième circuit (203b) de déphasage et d'amplification.

2. Cellule selon la revendication 1, dans laquelle le canal d'émission (201a) est adapté à émettre un premier signal présentant un premier état de polarisation, et le canal de réception (201b) est adapté à recevoir un deuxième signal présentant un deuxième état de polarisation, différent du premier état de polarisation.

3. Cellule selon la revendication 2, dans laquelle les premier et deuxième signaux présentent des polarisations linéaires orthogonales.

4. Cellule selon la revendication 2, dans laquelle les premier et deuxième signaux présentent des polarisations circulaire et linéaire, respectivement.

5. Cellule selon l'une quelconque des revendications 1 à 3, dans laquelle chacun des premier et deuxième éléments d'antenne (105a, 105b) comprend un plan conducteur de forme sensiblement carrée et des premier et deuxième ports (P1, P2) situés respectivement au voisinage de premier et deuxième côtés adjacents du plan conducteur.

6. Cellule selon la revendication 5, dans laquelle les premier et deuxième ports (P1, P2) du premier élément d'antenne (105a) sont situés respectivement à l'aplomb des premier et deuxième ports (P1, P2) du deuxième élément d'antenne.

7. Cellule selon la revendication 5 ou 6, dans laquelle les premier et deuxième ports (P1, P2) du premier élément d'antenne (105a) sont reliés respectivement, par les premier et deuxième circuits (203a, 203b) de déphasage et d'amplification, aux premier et deuxième ports (P1, P2) du deuxième élément d'antenne (105b).

8. Cellule selon la revendication 5 ou 6, dans laquelle les premier et deuxième ports (P1, P2) du premier élément d'antenne (105a) sont reliés respectivement, par les premier et deuxième circuits (203a, 203b) de déphasage et d'amplification, aux deuxième et premier ports (P2, P1) du deuxième élément d'antenne (105b).

9. Cellule selon l'une quelconque des revendications 1 à 8, comprenant en outre des premier et deuxième plans de masse (M1, M2) interposés entre le premier élément d'antenne (105a) et le deuxième élément d'antenne (105b).

10. Cellule selon la revendication 9, dans laquelle les premier et deuxième circuits (203a, 203b) de déphasage et d'amplification sont interposés entre les premier et deuxième plans de masse (M1, M2).

11. Cellule selon la revendication 9 ou 10, dans laquelle les premier et deuxième éléments d'antenne (105a, 105b) et les premier et deuxième plans de masse (M1, M2) sont formés dans des niveaux conducteurs d'une carte de circuit imprimé.

12. Cellule selon l'une quelconque des revendications 1 à 11, dans laquelle les canaux d'émission (201a) et de réception (201b) comprennent chacun un circuit de déphasage (205a, 205b) et un circuit d'amplification (207a, 207b) connectés en série entre le premier élément d'antenne (105a) et le deuxième élément d'antenne (105b).

13. Réseau transmetteur (103) comprenant une pluralité de cellules (105) selon l'une quelconque des revendications 1 à 12.

14. Réseau selon la revendication 13, dans lequel le premier élément d'antenne (105a) de chaque cellule (105) est isolé électriquement du premier élément d'antenne (105a) de chacune des autres cellules (105), et le deuxième élément d'antenne (105b) de chaque cellule est isolé électriquement du deuxième élément d'antenne (105b) de chacune des autres cellules (105).

15. Antenne (200) comprenant un réseau transmetteur (103) selon la revendication 13 ou 14 et au moins une source (101) configurée pour irradier une face du réseau.
